# EUROPÄISCHE PATENTSCHRIFT

(11) **EP 0 495 949 B1**
(45) Veröffentlichungstag und Bekanntmachung des Hinweises auf die Patenterteilung: **20.04.1994**
(21) Anmeldenummer: 91914142.4
(22) Anmeldetag: 06.08.1991
(51) Int. Cl.: B29B 9/06, B65G 51/03, B29C 35/16, B29K 101/00

(54) **VORRICHTUNG ZUM ABKÜHLEN UND GRANULIEREN VON SCHMELZFLÜSSIGEN STRÄNGEN**
DEVICE FOR COOLING AND GRANULATING MOLTEN STRANDS
DISPOSITIF DE REFROIDISSEMENT ET DE GRANULATION DE CORDONS EN FUSION

(30) Priorität: 21.08.1990 DE 4026337
(43) Veröffentlichungstag der Anmeldung: 29.07.1992
(73) Patentinhaber: Rieter Automatik GmbH, D-63757 Grossostheim (DE)
(72) Erfinder: KEILERT, Jürgen, D-8751 Kleinwallstadt (DE); NOGOSSEK, Alfred, D-8700 Würzburg (DE); ZANG, Harald, D-8751 Kleinostheim (DE)
(74) Vertreter: Bardehle, Heinz, Dipl.-Ing.
(86) Internationale Anmeldenummer: EP9101482
(87) Internationale Veröffentlichungsnummer: WO9203270

(56) Entgegenhaltungen:
- EP-A- 0 236 657
- DE-U- 8 708 816
- FR-A- 2 284 420
- Patent Abstracts of Japan, volume 9, No. 63, (M-365)[1786], 20 March 1985; & JP, A, 59196227 (TOUYOU KAGAKU K.K.) 7 November 1984, see abstract
- Patent Abstracts of Japan, volume 10, No. 307, (M-527)[2363], 18 October 1986; & JP, A, 61119512 (SHOWA DENKO KENZAI K.K.) 6 June 1986, see abstract

## Beschreibung

Die Erfindung bezieht sich auf eine Vorrichtung gemäß dem Oberbegriff des Patentanspruchs 1.

Eine derartige Vorrichtung ist aus der DE-PS 39 00 250 bekannt. Bei dieser Vorrichtung werden schmelzflüssig aus Düsen austretende Stränge mittels eines Kühlflüssigkeitsstroms gekühlt, der über eine Ablaufrinne geleitet wird, deren oberen Ende die schmelzflüssigen Stränge zugeleitet werden. Aufgrund dieser Kühlung der Stränge müssen diese wieder getrocknet werden, was bei der bekannten Vorrichtung dadurch geschieht, daß der Ablaufrinne eine Entwässerungsstrecke nachgeordnet wird, von der aus die gekühlten und getrockneten Stränge dann in einen Granulator eingeleitet werden. Die Trocknung erfolgt dabei in einer Entwässerungsstrecke, deren Boden mit Eintrittsdüsen für einen Gasstrom versehen sind, so daß die im Bereich der Entwässerungsstrecke geführten Stränge gegenüber deren Boden weitgehend reibungsfrei geführt werden, wobei durch den an den Strängen vorbeifließenden Gasstrom die Stränge gleichzeitig getrocknet werden.

Der Erfindung liegt die Aufgabe zugrunde, den Aufwand im Zusammenhang mit der Verwendung der bekannten Vorrichtung zu verringern. Erfindungsgemäß geschieht dies durch die im kennzeichnenden Teil des Patentanspruchs 1 angegebenen Merkmale.

Aufgrund der Gestaltung der erfindungsgemäßen Vorrichtung wird bei deren Anwendung jegliche Kühlflüssigkeit vermieden. Infolgedessen entfällt jegliches Trocknungsproblem. Die Transportfunktion für die Stränge wird dabei in vollem Umfang von den durch das längsgerillte Lochblech bzw. Siebmaterial hindurchtretenden Gasstrom übernommen. Dabei ergibt sich der besondere Vorteil, daß durch die Abkühlung mittels des Gasstromes das Material der Stränge nicht wie bei der Kühlung durch Flüssigkeit abgeschreckt wird, sondern langsam und gleichmäßig abgekühlt wird. Diese Art der Kühlung vermeidet das Auftreten von inneren Spannungen in den Strängen, die bei besonders empfindlichen Materialien im Falle einer Kühlung durch Abschreckung zur Materialzerstörung führen können. Zusammen mit dem in die Rillen geblasenen längsgerichteten Gasstrom werden die Stränge in Richtung des Auffangbereichs und des anschließenden Transportbereichs umgebogen und weitergeleitet, ohne an dem Auffangbereich anhaften zu können.

Als Medium für den Gasstrom kommt in erster Linie Luft in Frage, es ist aber auch insbesondere im Falle besonders empfindlicher Materialien möglich, ein inertes Gas zu verwenden (z. B. Stickstoff).

Um im Auffangbereich für die aus den Düsen austretenden Stränge deren sicheren Transport in Richtung Transportbereich zu erleichtern, kann man dem Auffangbereich eine Neigung mit einem Winkel von mindestens etwa 10° gegenüber der Horizontalen geben.

Zur Erzeugung des längsgerichteten Gasstroms am oberen Ende der Transportrinne sieht man zweckmäßig am Auffangbereich besondere Gasdüsen vor und richtet diese so, daß in jeder Rille ein die Stränge auffangender und leitender Gasstrom erzeugt wird. Dieser Gasstrom in jeder Rille übernimmt die Aufgabe des sofortigen Umleitens der aus den Düsen austretenden Stränge im Auffangbereich. Der Auffangbereich kann daher auch horizontal ausgerichtet sein.

Um den Auffangbereich und den anschließenden Transportbereich in ausreichender und gleichmäßiger Weise mit dem Gasstrom zu versorgen, sieht man zweckmäßig unterhalb der Transportrinne mehrere aneinander anschließende Gaszuführungsschächte vor. Diese Gaszuführungsschächte können gegebenenfalls einzeln hinsichtlich der zugeführten Gasmenge und Strömungsgeschwindigkeit geregelt werden, um je nach Bedarf die einzelnen Bereiche der Transportrinne in ausreichender Weise mit Gas zu versorgen.

Im Falle der Verwendung von Lochblech als Grund für die Transportrinne gibt man den Durchlässen im Lochblech zweckmäßig eine Neigung in Bewegungsrichtung der Stränge, wodurch der durch die Durchlässe hindurch tretende Gasstrom zusätzlich zum Abheben der Stränge von Transportrinne dafür sorgt, daß auf die Stränge eine Transportkomponente in Richtung zum Ende der Transportrinne wirkt.

Aufgrund der Wirkung des Gasstromes sowohl im Sinne des Tragens und Führens der Stränge läßt sich die Transportrinne in einem weiten Bereich hinsichtlich ihres Winkels gegenüber der Horizontalen einstellen, und zwar auch derart, daß die Transportrinne in Förderrichtung geringfügig ansteigt. Dies ist besonders dann von Vorteil, wenn der der Transportrinne folgende Granulator eine relativ hochliegende Einmündung aufweist.

Den Auffangbereich kann man getrennt vom anschließenden Transportbereich verschiebbar und/oder verschwenkbar anordnen, so daß vor allem beim Anfahren der Vorrichtung die in dieser Betriebsphase häufig noch verunreinigten Stränge am Auffangbereich vorbei in irgendeinen Abfallbehälter geleitet werden können. Die dabei auch vorgesehene Verschwenkbarkeit ermöglicht es, den Auffangbereich an unterschiedliche Eigenschaften des Materials der Stränge anzupassen, nämlich bei Verarbeitung eines mehr zum Ankleben neigenden Materials der Stränge dem Auffangbereich eine steilere Lage zu geben.

Die Transportfunktion im Transportbereich läßt sich dadurch verbessern, daß man den Transportbereich mit einem Vibrator zu Erzeugung einer Vorschubkomponente für die Stränge versiebt. Dies ist besonders dann bedeutsam, wenn der Transportbereich leicht aufwärts gerichtet ist.

In den Figuren sind Ausführungsbeispiele der Erfindung dargestellt. Es zeigen:
- Figur 1: die Vorrichtung in perspektivischer Sicht schräg von der Seite gesehen.
- Figur 2: einen Ausschnitt aus der Transportrinne mit einer einzigen winkelförmig gestalteten Rille,
- Figur 3: eine Abwandlung der Anordung gemäß Figur 2, bei der die Rille parabelförmig gestaltet ist,
- Figur 4: die Anordung gemäß Figur 1 mit leicht aufwärts gerichteten Transportbereich,
- Figur 5: die gleiche Vorrichtung mit abwärts gerichteten Transportbereich, wobei gleichzeitig der Auffangbereich hochgestellt ist,
- Figur 6: einen Auffangbereich in perspektivischer Sicht mit den Düsen für den längsgerichteten Gasstrom.

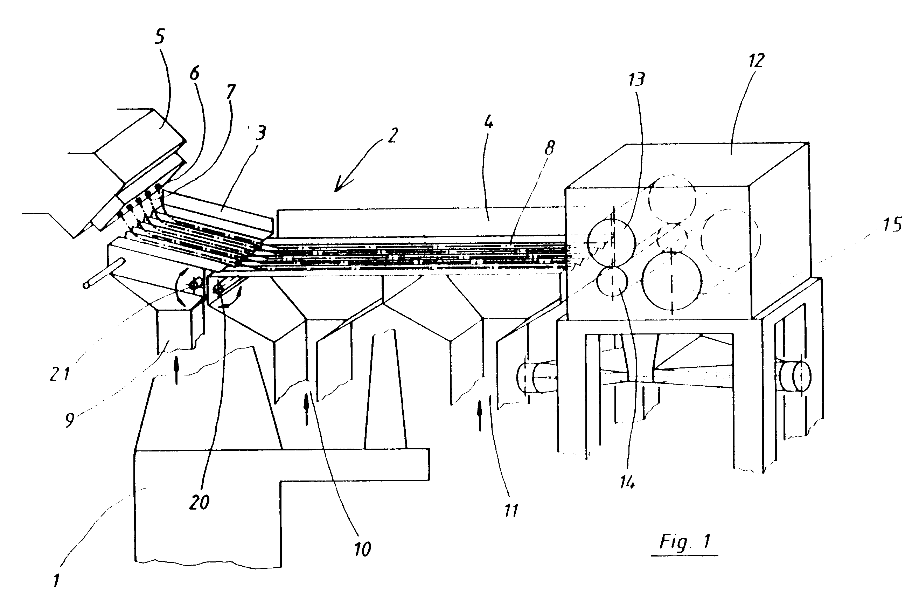

Die in der Figur 1 dargestellte Vorrichtung enthält das Gestell 1, an dem in in diesem Zusammenhang nicht interessierender Weise die Transportrinne 2 befestigt ist. Die Transportrinne 2 besteht aus dem Auffangbereich 3 und dem Transportbereich 4. Über dem Auffangbereich 3 ist der Düsenkopf 5 mit den Düsen 6 angeordnet, aus denen schmelzflüssig die Stränge 7 austreten. Dem Düsenkopf 5 wird das Material der Stränge 7 in hier nicht interessierender bekannter Weise zum Beispiel von einem nicht dargestellten Extruder zugeführt. Bei den Strängen 7 handelt es sich insbesondere um Kunststoffstränge. Der Auffangbereich 3 und der anschließende Transportbereich 4 ist in seinem Boden aus längsgerilltem Siebmaterial gestaltet, daß heißt in das Siebmaterial sind einzelne längsverlaufende Rillen 8 eingeprägt. Insgesamt sind für die Transportrinne 2 fünf einzelne Rillen 8 vorgesehen, denen fünf Düsen 6 gegenüber stehen. Die Anordnung der Düsen 6 zu den Rillen 8 ist so gestaltet, daß die aus den Düsen 6 austretenden Stränge 7 jeweils einzeln direkt in eine der Rillen 8 einlaufen und von der betreffenden Rille dann über den Auffangbereich und den anschließenden Transportbereich geleitet werden.

Unterhalb des Auffangbereichs 3 und des Transportbereichs 4 sind die Gaszuführungsschächte 9, 10 und 11 vorgesehen, die jeweils einen in Richtung des eingezeichneten Pfeils verlaufenden Gasstrom führen, der von einem oder mehreren nicht dargestellten Gebläsen geliefert wird. Dabei versorgt der Gaszuführungsschacht 9 den Auffangbereich 3 und die beiden aneinander anschließenden Gaszuführungsschächte 10 und 11 den Transportbereich 4. Insgesamt ergibt sich damit eine Anordnung, bei der die Transportrinne 2 über ihre gesamte Länge aus dem längsgerillten Siebmaterial besteht, wobei über diese gesamte Länge das Siebmaterial mit dem durch die Transportrinne 2 durchtretenden Gasstrom versorgt wird.

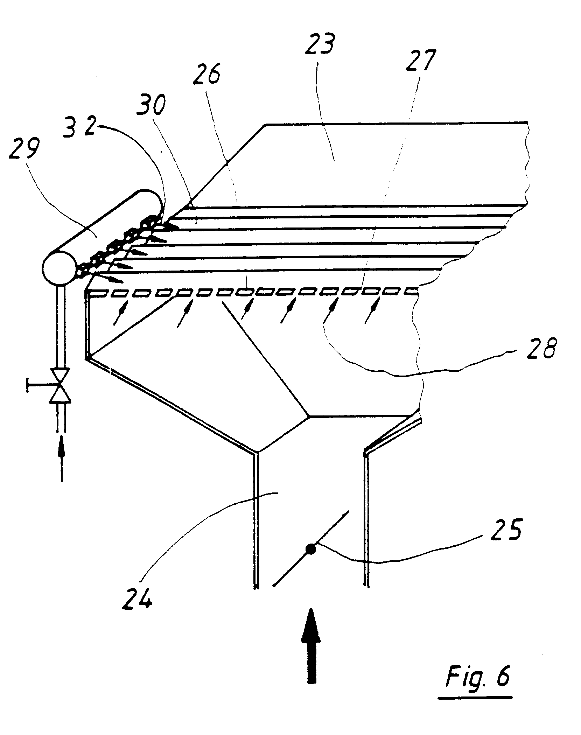

Wie die Figur 1 zeigt, werden die schmelzflüssig aus den Düsen 6 austretenden Stränge 7 von dem Auffangbereich 3 aufgefangen und in die Längsrichtung des Auffangbereichs 3 umgelenkt, wobei der von dem Gaszuführungsschacht 9 gelieferte Gasstrom dafür sorgt, daß die einzelnen Stränge 7 in ihrer betreffenden Rille 8 vom Gasstrom getragen und in Richtung auf den Transportbereich 4 weitergeleitet werden. Der Gasstrom tritt dabei durch das Siebmaterial im Bereich der Rillen 8 unter ausreichendem Druck und mit ausreichender Strömungsgeschwindigkeit hindurch und hält daher die Stränge 7 vom Siebmaterial weg, so daß die Stränge 7 nicht festkleben können. Die Stränge 7 werden durch diese Weise dem im wesentlichen horizontal verlaufenden Transportbereich 4 zugeleitet, in dem durch die von den Gaszuführungsschächten 10 und 11 zugeführten Gasströmen dafür gesorgt wird, daß die Stränge 7 weitergeleitet werden, bis sie schließlich am rechten Ende des Transportbereichs 4 in den schematisch dargestellten Granulator 12 gelangen. Bei diesem kann es sich um einen konventionellen Stranggranulator mit Einzugswalzen 13 und 14 und Messerwalze 15 handeln. Auf die Erzeugung des längsgerichteten Gasstroms am oberen Ende der Transportrinne 2 wird im Zusammenhang mit Figur 6 näher eingegangen.

Wie sich aus der vorstehenden Darstellung ergibt, erfolgt bei der Vorrichtung die Kühlung der schmelzflüssig austretenden Stränge 7 lediglich durch die aufeinanderfolgenden Gasströme, so daß schließlich der Granulator 12 ausreichend oberflächlich gekühltes Strangmaterial erhält, ohne daß es dabei wie bei den bekannten Vorrichtungen irgendeiner Trocknung bedarf. Es sei in diesem Zusammenhang noch darauf hingewiesen, daß die Gestaltung des Transportbereichs 4 aus längsgerilltem Lochblech bzw. Siebmaterial auch vor Einmündung in den Granulator 12 enden kann, wenn die Kühlung und Verfestigung des zu verarbeitenden Strangmaterials bereits vor Erreichen des Granulators 12 soweit fortgeschritten ist, daß es einer weiteren Kühlung nicht mehr bedarf.

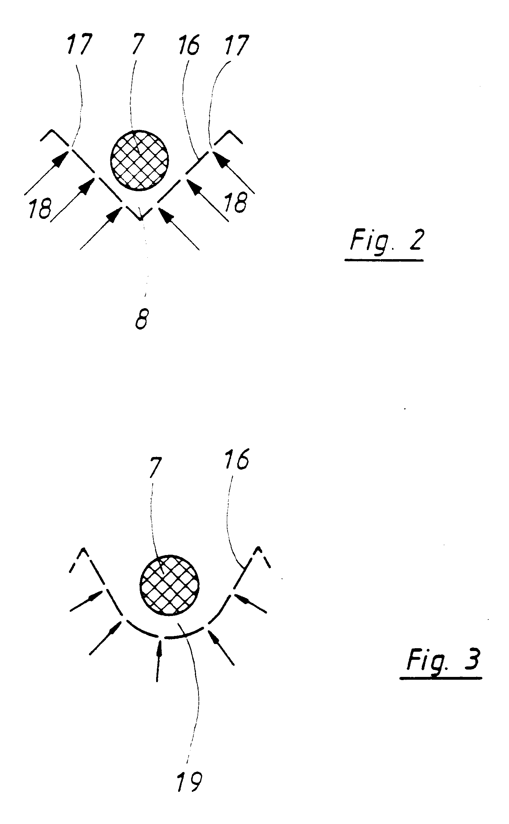

In den Figuren 2 und 3 sind Ausführungsbeispiele für jeweils eine Rille des Auffangsbereichs bzw. Transportbereichs dargestellt. Gemäß Figur 2 ist die Rille 8 winkelförmig gebildet, und zwar als Lochblech 16 mit den Durchlässen 17. Durch die Durchlässe 17 tritt der Gasstrom 18 hindurch, der dafür sorgt, daß der Strang 7 mit Abstand von dem Lochblech 16 freischwebend getragen wird.

Bei der in der Figur 3 dargestellten Variante handelt es sich um ein Lochblech 16 mit parabelförmig gestalteter Rille 19, die in entsprechender Weise mit dem Strang 7 zusammenwirkt, wie dies im Zusammenhang mit der Figur 2 vorstehend dargestellt ist.

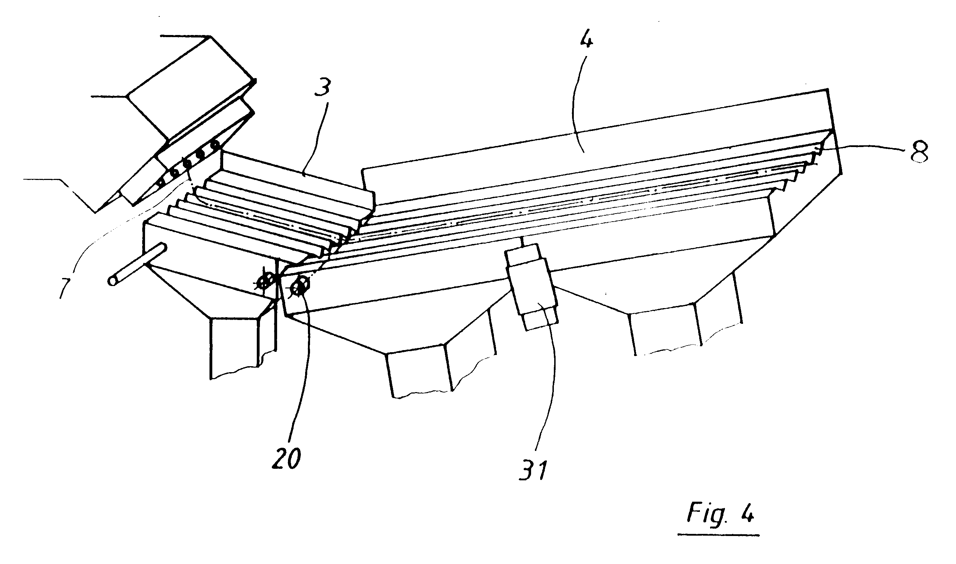

Figur 4 zeigt die Vorrichtung gemäß Figur 1 mit aufwärtsgeneigtem Transportbereich 4, wozu dieser um die Drehachse 20 entsprechend verdreht ist. Der durch das Siebmaterial bzw. Lochblech 16 (siehe Figur 2 und 3) hindurchtretende Luftstrom sorgt dabei dafür, daß trotz der geringen Aufwärtsneigung des Transportbereichs 4 die Stränge 7 (nur ein Strang eingezeichnet) in Längsrichtung des Transportbereichs 4 aufwärts bewegt werden. Um diesen Effekt zu verstärken, kann man ein besonders gestaltetes Lochblech verwenden, wie dieses in Figur 6 dargestellt ist. Hierauf wird weiter unten näher eingegangen.

Um den von der Vorrichtung gemäß Figur 4 geführten Strängen 7 eine zusätzliche Transportkomponente zu geben, ist hier am Transportbereich 4 der Vibrator 31 befestigt, der aufgrund entsprechender an sich bekannter Bewegung und Vibration auf den Transportbereich 4 leichte Erschütterungen überträgt, die dafür sorgen, daß die in den einzelnen Rillen 8 geführten Stränge 7 mit Sicherheit über den Transportbereich 4 weitergeleitet werden.

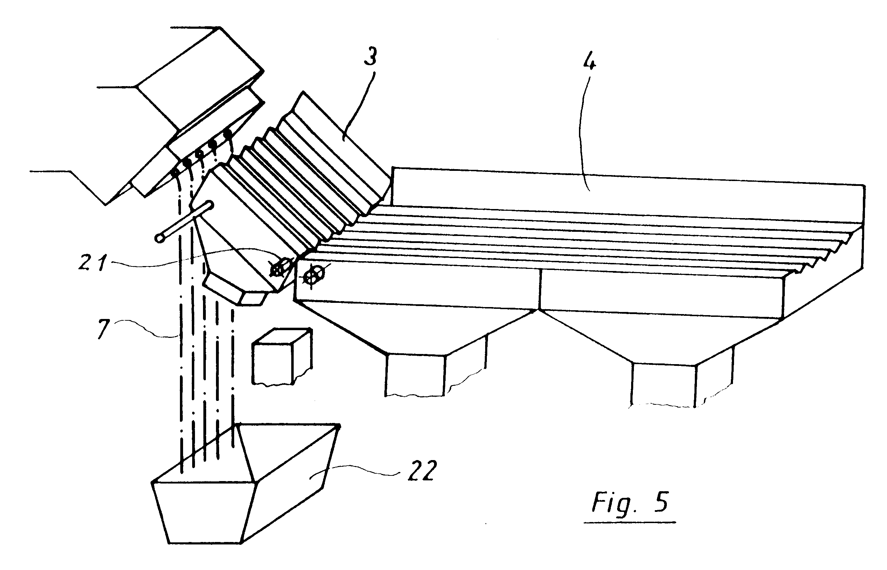

In der Figur 5 ist die Anordnung gemäß Figur 1 in einer weiteren Betriebsphase dargestellt, und zwar mit hochgeschwenktem Auffangbereich 3. Der Auffangbereich 3 nimmt dabei eine Lage ein, in der anfangs aus den Düsen 6 austretende Stränge 7 senkrecht nach unten in einen Auffangbehälter 22 einfallen. Die dargestellte Betriebsphase dient dazu, beim sog. Anfahren der Vorrichtung Strangmaterial abzuleiten, das während dieses Zeitraums noch nicht die vollen Qualitätseigenschaften aufweist, insbesondere also zunächst noch irgendwelche Verschmutzungen besitzt. Der Auffangbereich 3 ist dabei von dem Gaszuführungsschacht 9 nach oben weggeschwenkt, und zwar um die Drehachse 21. Wenn dann einwandfreies Material durch die Düsen 6 austritt, wird der Auffangbereich 3 wieder in die in der Figur 1 dargestellte Lage zurückgeschwenkt, wobei gegebenfalls mittels einer automatisierten Vorrichtung die Düsen 6 mit einem nicht dargestellten Messer in bekannter Weise überstrichen werden, um sicherzustellen, daß bei herabgeschwenktem Auffangbereich 3 nur einwandfreies Material diesen erreicht.

In der Figur 5 ist noch eine weitere mögliche Winkellage des Transportbereichs 4 gezeigt. Gemäß Figur 5 nimmt der Transportbereich 4 eine leicht abwärtsgeneigte Lage ein, wozu der Transportbereich 4 in entsprechender Weise um die Drehachse 20 geschwenkt ist.

Figur 6 zeigt den Auffangbereich 23, der hier in einer horizontalen Lage angeordnet ist. Der Auffangbereich 23 ist mit dem Luftzuführungsschacht 24 versehen, in dem die Drosselklappe 25 eingebaut ist, um gegebenfalls den Gasstrom durch den Gaszuführungsschacht 24 zu regeln. Um wegen der Horizontallage des Auffangbereichs 23 für einen sicheren Transport der zugeführten Stränge zu sorgen, ist hier der Auffangbereich 23 aus gerilltem Lochblech 26 gestaltet, bei dem die Durchlässe 27 in Bewegungsrichtung der nicht dargestellten Stränge geneigt sind. Der Gasstrom (dargestellt durch die Pfeile 28) wird aufgrund dieser Neigung der Durchlässe 27 so gerichtet, daß er im Bezug auf die Stränge eine Transportkomponente bewirkt. Zusätzlich sind die Gasdüsen 29 vorgesehen, und zwar pro Rille 30 eine Gasdüse 29. Die Gasdüsen 29 blasen jeweils einen Gasstrom 32 in die einzelnen Rillen 30 ein und sorgen dafür, daß die auf das längsgerillte Lochblech 26 zufließenden Stränge ohne Berührung mit dem Lochblech 26 umgeleitet und längs der Rillen 30 getragen und geführt werden.

Ein derart gestaltetes Lochblech 26 mit geneigten Durchlässen 27 kann, wie im Zusammenhang mit der Figur 4 erläutert, auch bei dem in den Figuren 1, 4 und 5 dargestellten Auffangbereich 3 vorgesehen sein.

## Patentansprüche

1. Vorrichtung zum Abkühlen und Granulieren von schmelzflüssig aus Düsen (6) austretenden Strängen (7) insbesondere aus Kunststoffen mit einer mit ihrem aufnahmeseitigen Ende (Auffangbereich (3,23)) unter den Düsen (6) angeordneten Transportrinne (2) und einem der Transportrinne (2) nachgeordneten Granulator (12) **dadurch gekennzeichnet**, daß die Transportrinne (2) im wesentlichen über ihre gesamte Länge, bestehend aus Auffangbereich (3,23) mit anschließendem Transportbereich (4), aus derart längsgerilltem Lochblech (16) bzw. Siebmaterial besteht, daß pro Rille (8) jeweils nur ein Strang (7) geführt wird, und die Stränge (7) entlang der Transportrinne (2) von einem durch sie hindurchtretenden Gasstrom (18,28) getragen und geführt werden, wobei am oberen Ende der Transportrinne (2) vor dem Auffangen der Stränge (7) in die Rillen (8) ein längsgerichteter Gasstrom (32) geblasen wird.

2. Vorrichtung nach Anspruch 1, **dadurch gekennzeichnet,** daß **d**er Auffangbereich (3) in einem Winkel von mindestens etwa 10° gegenüber der Horizontalen geneigt ist.

3. Vorrichtung nach Anspruch 1 oder 2, **dadurch gekennzeichnet**, daß auf den Auffangbereich (23) Gasdüsen (29) gerichtet sind, die in jeder Rille (30) einen die Stränge (7) auffangenden und leitenden Gasstrom (32) erzeugen (Fig.6).

4. Vorrichtung nach einem der Ansprüche 1 bis 3, **dadurch gekennzeichnet**, daß unterhalb der Transportrinne (2) mehrere aneinander anschließende Gaszuführungsschächte (9,10.11) vorgesehen sind.

5. Vorrichtung nach einem der Ansprüche 1 bis 4, **dadurch gekennzeichnet**, daß die Durchlässe (27) im Lochblech (26) in Bewegungsrichtung in der Stränge (7) geneigt sind.

6. Vorrichtung nach einem der Ansprüche 1 bis 5, **dadurch gekennzeichnet**, daß die Transportrinne (2) gegenüber der Horizontalen im Winkel einstellbar ist.

7. Vorrichtung nach einem der Ansprüche 1 bis 6, **dadurch gekennzeichnet**, daß der Auffangbereich (3) getrennt vom anschließenden Transportbereich (4) verschiebbar und/oder verschwenkbar angeordnet ist.

8. Vorrichtung nach einem der Ansprüche 1 bis 7, **dadurch gekennzeichnet**, daß der Transportbereich (4) mit einem Vibrator (31) zur Erzeugung einer Vorschubkomponente für die Stränge (7) versehen ist.

## Claims

1. Device for cooling and granulating molten strands (7), in particular of plastic, extruded from nozzles (6), comprising a conveying channel (2) the input end (collecting area (3, 23)) of which is arranged below the nozzles (6) and a granulator (12) arranged downstream of the conveying channel (2), characterised in that the conveying channel (2) consists essentially over its entire length, consisting of the collecting area (3, 23) together with the subsequent conveying area (4), of perforated sheet metal (16) or sieve material which is longitudinally corrugated in such a manner that only one strand (7) is conveyed per corrugation (8) and the strands (7) are carried and guided along the conveying channel (2) by a gas stream (18, 28) which passes through it, a longitudinal gas stream (32) being blown into the corrugations (8) at the upper end of the conveying channel (2) before the strands (7) are collected.

2. Device according to claim 1, characterised in that the collecting area (3) is inclined at an angle of at least approximately 10° relative to the horizontal.

3. Device according to claim 1 or claim 2, characterised in that gas nozzles (29) which produce a gas stream (32) collecting and guiding the strands (7) in each corrugation (30) are directed towards the collecting area (23) (Fig. 6).

4. Device according to one of claims 1 to 3, characterised in that a plurality of adjacent gas intakes (9, 10, 11) are provided below the conveying channel (2).

5. Device according to one of claims 1 to 4, characterised in that the holes (27) in the perforated sheet metal (26) are inclined in the direction of movement of the strands (7).

6. Device according to one of claims 1 to 5, characterised in that the angle of the conveying channel (2) with respect to the horizontal can be adjusted.

7. Device according to one of claims 1 to 6, characterised in that the collecting area (3) is arranged so that it can move and/or pivot separately from the adjacent conveying area (4).

8. Device according to one of claims 1 to 7, characterised in that the conveying area (4) is provided with a vibrator (31) for producing a thrust component for the strands (7).

## Revendications

1. Dispositif pour refroidir et transformer en granulés des fils (7) en particulier en matières plastiques sortant en fusion de filières (6), comportant une goulotte de transport (2) dont l'extrémité côté réception (zone de réception 3, 23) est disposée sous la filière et un granulateur (12) monté en aval de la goulotte de transport (2), caractérisé en ce que la goulotte de transport (2) est constituée sensiblement sur toute sa longueur, comprenant la zone de réception (3, 23) avec la zone de transport qui s'y raccorde (4), de tôle perforée (16) ou d'un tamis rainuré dans le sens longitudinal de manière telle qu'un seul fil (7) est guidé par chaque rainure (8) et que les fils (7) sont portés et guidés le long de la goulotte de transport (2) par un flux gazeux (18, 28) traversant celle-ci, un flux gazeux (32), orienté dans le sens longitudinal, étant pulsé à l'extrémité supérieure de la goulotte de transport (2) avant la réception des fils (7) dans les rainures (8).

2. Dispositif selon la revendication 1, caractérisé en ce que la zone de réception (3) est inclinée selon un angle d'au moins 10° environ par rapport à l'horizontale.

3. Dispositif selon les revendications 1 ou 2, caractérisé en ce que des buses de gaz (29) sont orientées vers la zone de réception (23), qui créent (figure 6) dans chaque rainure un flux de gaz captant et guidant les fils (7).

4. Dispositif selon l'une quelconque des revendications 1 à 3, caractérisé en ce que plusieurs goulottes de guidage du gaz (9, 10, 11) disposées les unes à la suite des autres sont prévues sous la goulotte de transport (2).

5. Dispositif selon l'une quelconque des revendications 1 à 4, caractérisé en ce que les orifices (27) de passages ménagés dans la tôle perforée (26) sont inclinés dans le sens de déplacement des fils (7).

6. Dispositif selon l'une quelconque des revendications 1 à 5, caractérisé en ce qu'il est possible de régler l'angle d'inclinaison de la goulotte de transport (2) par rapport à l'horizontale.

7. Dispositif selon l'une quelconque des revendications 1 à 6, caractérisé en ce que la zone de réception (3) et disposée en pouvant être déplacée et/ou en étant capable de pivoter séparément de la zone de transport (4) s'y raccordant.

8. Dispositif selon l'une quelconque des revendications 1 à 7, caractérisé en ce que la zone de transport (4) est pourvue d'un vibreur (31), pour créer un composant d'avance des fils (7).
